# EUROPÄISCHE PATENTSCHRIFT

(11) **EP 0 781 960 B1**
(45) Veröffentlichungstag und Bekanntmachung des Hinweises auf die Patenterteilung: **27.09.2000**
(21) Anmeldenummer: 96810741.7
(22) Anmeldetag: 06.11.1996
(51) Int. Cl.: F22B 1/18, F22B 37/52, F01K 23/10

(54) **Reinigung des Wasser-Dampfkreislaufs in einem Zwangsdurchlaufdampferzeuger**
Purification of a water-steam cycle in an once-through steam generator
Purification du cycle eau-vapeur dans une chaudière à passage unique

(30) Priorität: 28.11.1995 DE 19544225
(43) Veröffentlichungstag der Anmeldung: 02.07.1997
(73) Patentinhaber: ABB ALSTOM POWER (Schweiz) AG, 5401 Baden (CH)
(72) Erfinder: Liebig, Erhard, Dr., 71254 Ditzingen (DE); Ruchti, Christian, Dr., 8610 Uster (CH)

(56) Entgegenhaltungen:
- EP-A- 0 359 735
- EP-A- 0 561 220
- CH-A- 322 434
- DE-A- 4 303 613
- DE-B- 1 000 828
- DE-C- 809 199
- GB-A- 431 241

## Beschreibung

### Technisches Gebiet

Die Erfindung betrifft ein Verfahren zum Reinigen des Wasser-Dampfkreislaufs einer kombinierten Gas-Dampf-Kraftwerksanlage gemäss Oberbegriff der unabhängigen Ansprüche.

### Stand der Technik

Abhitzekessel zur Nutzung der Abwärme von Gasturbinenanlagen werden in der Regel mit Trommelkesseln ausgeführt. Die Reinigung des Wasser-Dampfkreislaufes erfolgt über die Aufkonzentration in der jeweiligen Trommel und eine kontinuierliche oder diskontinuierliche Abschlämmung der Trommel.

Sind die Abhitzekessel indes mit einem Zwangsdurchlaufkessel versehen, so entfällt dieser Reinigungsmechanismus. Die Reinigung des Wasser-Dampfkreislaufes wird in diesem Fall in einer Kondensatreinigungsanlage vollzogen.

Ein Verfahren zum Reinigen des Wasser-Dampfkreislaufs einer kombinierten Gas-Dampf-Kraftwerksanlage, welche einen Gasturbinenkreislauf und einen Dampfturbinenkreislauf aufweist - wobei die Abgase einer Gasturbine ihre Restwärme über das in einem 2-Druck-Dampferzeuger strömende Arbeitsmittel an eine Dampfturbine abgeben, wobei der 2-Druck-Dampferzeuger in einem Niederdruckteil als Umlaufsystem mit Trommel und in einem Hochdruckteil als Zwangsdurchlaufsystem ausgeführt ist, und wobei der Zwangsdurchlaufdampferzeuger im wesentlichen aus einem Hochdruckeconomiser, einem Hochdruckverdampfer und einem Hochdrucküberhitzer besteht, und wobei zwischen dem Hochdruckverdampfer und dem Hochdrucküberhitzer eine Abscheideflasche geschaltet ist - ist bekannt aus der EP-A-0 561 220. Deren Niederdruckteil kann über seine Trommel abgeschlämmt werden; für den Hochdruckteil ist wahrscheinlich eine Kondensatreinigungsanlage vorgesehen. Der dortige Wasser-Dampf-Trennbehälter ist als sogenannte - bei Zwangsdurchlaufsystemen übliche - Anfahrflasche beschrieben.

### Darstellung der Erfindung

Der Erfindung liegt die Aufgabe zugrunde, eine Anlage der eingangs genannten Art zu schaffen, die ohne Kondensatreinigungsanlage auskommt.
Erfindungsgemäss wird dies mit den kennzeichnenden Merkmalen der unabhängigen Ansprüche erreicht.
Zwar ist es aus der GB 431,241 bekannt, bei einem Zwangsdurchlaufkessel über die Speisepumpe eine grössere Menge Wasser als erforderlich durch den Economiser und den Verdampfer zu fördern. Diese Wassermenge ist so bemessen, dass Flüssigkeit in die Abscheideflasche (25) gelangt, welche mit den darin enthaltenen gelösten und in Suspension vorliegenden Verunreinigungen in der Abscheideflasche separiert und über eine Abschlämmleitung abgezogen wird. Dieses Verfahren soll angewendet werden zum periodischen Beseitigen aus dem Kreislauf von festen Ablagerungen auf Verdampferrohren, wobei die Kriterien der Reinigung zum einen die Dampftemperatur und zum andern ein Zeitintervall sein können.

Die Vorteile der Erfindung sind unter anderem in einer beträchtlichen Senkung der Anlagen- und der Betriebskosten zu sehen sowie in der Risikoverminderung infolge Fehlens einer chemischen Anlage im Wasser-Dampfkreislauf.

Ist im Vollastbetrieb eine Reinigung des Wasser-Dampfkreislaufs beabsichtigt, ohne dass dabei das System überspeist werden soll, so wird zweckmässigerweise aus dem Verdampfer Dampf aus einer Stufe unvollständiger Verdampfung entnommen und in die Abscheideflasche geleitet. Bei starker Verunreinigung wird mit Vorteil die gesamte Dampfmenge aus dieser Stufe unvollständiger Verdampfung entnommen und in die Abscheideflasche geführt, während bei geringer Verunreinigung nur eine Teilmenge Dampf entnommen und zusammen mit der am Austritt des Verdampfers vorliegenden Restdampfmenge in die Abscheideflasche geleitet wird. Will man eine effektive Drucktrennung im Separationssystem, so bietet es sich an, den aus der Stufe unvollständiger Verdampfung entnommenen Dampf zunächst in eine erste Anfahr-Abscheideflasche und von dort in eine folgende Reinigungs-Abscheideflasche zu führen.

Beim Kaltstart ist es angebracht, das über den Verdampfer in die Abscheideflasche gelangende unterkühlte Wasser und später das aus dem erzeugten Nassdampf abgeschiedene Wasser über die Abschlämmleitung so lange zu verwerfen, bis die angestrebte Reinheit im Wasser-Dampfkreislauf erreicht ist.

### Kurze Beschreibung der Zeichnung

In der Zeichnung sind mehrere Ausführungsbeispiele der Erfindung dargestellt. Es sind nur die für das Verständnis der Erfindung wesentlichen Elemente gezeigt. Die Strömungsrichtung der Arbeitsmittel ist mit Pfeilen dargestellt.

Es zeigen:
- Fig. 1: das Schema einer kombinierten Gas-Dampf-Kraftwerksanlage;
- Fig. 2: ein Temperatur-Entropie-Diagramm;
- Fig. 3: ein Teilschema gemäss Fig.1 mit abweichender Abscheideflasche-Anordnung.

### Weg zur Ausführung der Erfindung

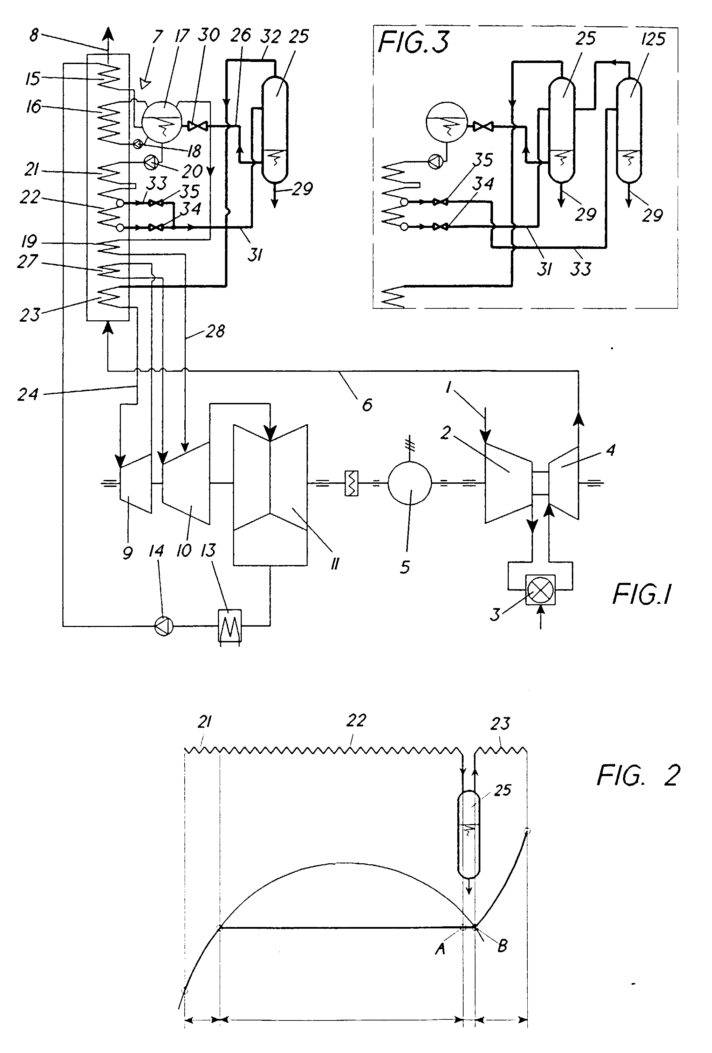

Gemäss Figur 1 wird im Gasturbinensystem über eine Leitung 1 angesaugte Frischluft in einem Verdichter 2 auf den Arbeitsdruck verdichtet. Die verdichtete Luft wird in einer beispielsweise mit Erdgas befeuerten Brennkammer 3-stark erhitzt und das so entstandene Brenngas wird in einer Gasturbine 4 arbeitsleistend entspannt. Die dabei gewonnene Energie wird an einen Generator 5 bzw. den Verdichter 2 abgegeben. Das noch heisse Abgas der Gasturbine wird über eine Leitung 6 vom Ausgang der Gasturbine einer Abhitzedampferzeugungsanlage 7 zugeführt und daraus nach Abgabe seiner Wärme über eine Leitung 8 und einen nicht dargestellten Kamin ins Freie geleitet.

Im Wasser-Dampfkreislauf ist eine mehrgehäusige Dampfturbine 9, 10 und 11 auf der gleichen Welle mit der Gasturbine angeordnet. Der in der Niederdruckturbine 11 entspannte Arbeitsdampf kondensiert in einem Kondensator 13. Das Kondensat wird mittels einer Kondensatpumpe 14 direkt in den Dampferzeuger 7 gefördert. Bemerkenswert ist, dass die Anlage keine, in der Regel entnahmedampfbeheizte Niederdruckeconomiser, Speisewasserbehälter und Hochdruckeconomiser aufweist.

Die Abhitzedampferzeugungsanlage 7 ist als stehender Kessel ausgeführt und arbeitet im vorliegenden Fall nach einem Zweidruck-Dampfprozess. Selbstverständlich könnte auch ein liegender Kessel zur Anwendung gelangen.

Das Niederdrucksystem ist als Umlaufsystem mit Trommel ausgeführt, wobei hier ein Zwangsumlaufsystem gewählt worden ist. Es besteht im Rauchgasweg des Kessels aus einem Niederdruckeconomiser 15, in den das Kondensat eingeleitet wird, einem Niederdruckverdampfer 16 und einem Niederdrucküberhitzer 19. Der Niederdruckverdampfer ist über eine Umwälzpumpe 18 mit einer Trommel 17 verbunden. Der überhitzte Dampf wird über eine Niederdruck-Dampfleitung 28 in eine geeignete Stufe der Mitteldruck-Dampfturbine 10 überführt.

Das Hochdrucksystem ist als Zwangsdurchlaufsystem ausgeführt und damit sowohl für unterkritische als auch für überkritische Parameter auslegbar. Es besteht im Rauchgasweg des Kessels im wesentlichen aus dem Hochdruckeconomiser 21, dem Hochdruckverdampfer 22 und dem Hochdrucküberhitzer 23. Dem Hochdruckeconomiser 21 wird das Arbeitsmittel über eine Hochdruckspeisepumpe 20 aus der Niederdrucktrommel 17 zugeführt. Auf diese Weise kann der bisher übliche Speisewasserbehälter entfallen. Der überhitzte Dampf wird über eine Frischdampfleitung 24 in den Hochdruckteil 9 der Dampfturbine überführt.

Zur Phasentrennung ist eine Abscheideflasche 25 vorgesehen, in welche der Austritt des Hochdruckverdampfers 22 über eine Leitung 31 mündet. Die Abscheideflasche ist an ihrem obereren Ende über eine Leitung 32 mit dem Hochdrucküberhitzer 23 verbunden. An ihrem unteren Ende ist die Flasche zusätzlich mit einer Abschlämmleitung 29 versehen. Vom unteren Ende der Abscheideflasche geht ebenfalls eine Rezirkulationsleitung 26 ab, welche ein Absperrorgan 30 enthält und in die Niederdrucktrommel 17 mündet.

Nach der Teilentspannung im Hochdruckteil 9 der Turbine wird der Dampf vor der Überleitung in die Mitteldruckturbine 10 zwischenüberhitzt. Diese Zwischenüberhitzung erfolgt im Beispielsfall in Wärmetauschflächen 27, welche im Rauchgasweg des Dampferzeugers oberhalb des Hochdrucküberhitzers 23 angeordnet sind.

Durch Variation der Drücke und Massenströme im Umlaufsystem und im Durchlaufsystem kann mit einem solchen Dampferzeuger ein weiter Bereich von Kombiprozessen abgedeckt werden.

Mit dem Erreichen der jeweiligen Siedetemperaturen beginnt im Kessel die Dampfproduktion. Der erste Dampf im Niederdrucksystem wird durch Entspannung von rezirkuliertem Hochdruck-Sattwasser aus der Abscheideflasche erzeugt.

Die Abscheideflasche sorgt dafür, dass der Hochdrucküberhitzer jederzeit trocken bleibt und am Kesselaustritt frühzeitig überhitzter Dampf zur Verfügung steht. Sobald im Hochdruckverdampfer der für einen stabilen Betrieb notwendige Druck erreicht ist, kann der Frischdampf zum Anfahren der Dampfturbine im Gleitdruckbetrieb verwendet werden.

Gemäss der Erfindung soll nun auf eine Kondensatreinigungsanlage verzichtet werden. Dem liegt die Überlegung zugrunde, dass die Verunreinigungen im Dampf/Wasserkreislauf im Bereich der Abscheideflasche abgezogen werden können.

Die Reinigung des Dampf/Wasserkreislaufes kann sowohl bei Vollast als auch bei Teillast erfolgen. Bei Vollast wird das Hochdrucksystem überspeist, d.h. es wird über die Hochdruckspeisepumpe eine grössere Menge Wasser als erforderlich durch den Zwangsdurchlauf-Dampferzeuger gefördert. Es versteht sich, dass im Falle einer einzigen Hochdruckspeisepumpe diese für die Mehrmenge entsprechend grösser ausgelegt sein muss. Ist die Anlage mit einer Pumpenredundanz versehen, beispielsweise in Form von 2 x 100% oder 3 x 50%, so kann die Ersatzpumpe zur Überspeisung herangezogen werden.

Die geförderte Wassermenge wird so eingestellt, dass auf jeden Fall Nassdampf in die Flasche gelangt. In den Wassertröpfchen des Wasser-Dampf-Gemisches sind die Verunreinigungen gebunden. In der Flasche wird der Wasseranteil des Dampfes durch geeignete Mittel separiert und über die Abschlämmleitung 29 abgezogen. Von Vorteil bei diesem Verfahren ist, dass der Kreislauf bereits nach wenigen Durchläufen, d.h. innert kürzester Zeit, weitgehend von Verunreinigungen befreit ist.

Eine Variante, bei welcher die Kreislaufreinigung mit der für den Normalbetrieb dimensionierten Speisepumpe erfolgen kann, besteht darin, den Dampferzeuger von Vollast auf Teillast, beispielsweise 80%, zurückzufahren. Danach wird wie beim Vollastverfahren das Hochdrucksystem überspeist und nach dem oben beschriebenen Verfahren vorgegangen.

Da der Wirkungsgrad eines Wasser-Dampfkreislaufs entscheidend von der Frischdampftemperatur abhängt, ist es zweckmässig, auch während des Reinigungsvorganges diese Temperatur möglichst unverändert beizubehalten. Die Überspeisung und damit die in die Abscheideflasche gelangende Feuchte ist demnach so zu regeln, dass bei jeder Betriebslast die aus der Abscheideflasche zum Überhitzer abströmende Sattdampfmenge noch auf die zum entsprechenden Lastpunkt gehörende Frischdampftemperatur überhitzt werden kann. Dem liegt folgende Überlegung zugrunde:

Beim Normalbetrieb gelangt leicht überhitzter Dampf in die Abscheideflasche, welche somit trocken bleibt. Es erfolgt kein Wasserabzug. Durch kontinuierliche Erhöhung der Überspeisung des Dampferzeugersystems, d.h. durch Steigerung des Speisewassermassenstromes, geht die Überhitzung zunächst zurück. Die Frischdampftemperatur sinkt ab. Mit dem Erreichen des Nassdampfgebietes wird in zunehmendem Masse Feuchte in der Abscheideflasche abgeschieden. Der zum Überhitzer gelangende Massenstrom verringert sich. Infolge der sich dadurch verringernden dampfseitigen Belastung des Überhitzers beginnt die Frischdampftemperatur wieder bis zum ursprünglichen Wert anzusteigen.

In der Fig. 2 ist in einem Temperatur-Entropie-Diagramm die symbolische Anordnung der Abscheideflasche 25 während der Reinigungssphase dargestellt. In der Nassdampfphase wird zwischen den Punkten A und B Feuchte aus der Abscheideflasche abgezogen.

Aus alldem ergibt sich, dass im Normalbetrieb die Abscheideflasche 25 trocken ist, während zum Reinigen bei Vollast oder bei Teillast Nassdampf in die Flasche gelangen muss. Nach dem oben beschriebenen Verfahren gelangt die notwendige Feuchte in die Flasche, in dem das System überspeist wird, was durch Erhöhen des Speisewassermassenstromes und/oder durch Zurückfahren der Gasturbine erreicht wird. Es ist nicht zu verkennen, dass diese Reinigungsprozedur einige zusätzliche Bedingungen schafft. Zu erwähnen sind die diesbezüglich erforderliche Regelung der Speisepumpe bzw. der Gasturbine, die Absenkung und der Wiederanstieg der Frischdampftemperatur sowie ggfs. das Zurückfahren der Anlage in die Teillast. Bei einer Vollastreinigung ist insbesondere eine erhöhte Speisepumpenleistung notwendig.

Abhilfe schafft hier ein Verfahren, das im Vollastbetrieb ohne Überspeisung des Systems arbeitet. Es handelt sich dabei um eine mehrstufige Anspeisung der Abscheideflasche 25 oder aber eine Anspeisung mehrstufiger, seriell geschalteter Abscheideflaschen.

In Fig. 1 ist die erstgenannte Methode dargestellt. Der Verdampfer 22 ist an geeigneter Stelle geteilt, d.h. mit einem zusätzlichen Sammler versehen. Von diesem Sammler aus zweigt eine Leitung 33 ab, welche in die zur Abscheideflasche 25 führende Leitung 31 mündet. Selbstverständlich könnte die Leitung 33 auch direkt in die Flasche 25 geführt werden. In den beiden Leitungen 31 und 33 sind je ein Ventil 34, 35 angeordnet. Geeignete Stelle heisst im vorliegenden Fall, dass der dort abgezogene Dampf nicht vollständig verdampft ist und noch eine Feuchte von mindestens 10-15% aufweisen soll. Gefahren wird eine solche Anlage wie folgt:

Beim Starten und im Normalbetrieb ist das Ventil 34 offen. Das Ventil 35 ist geschlossen. Die Leitung 31 zur Flasche 25 wird nur von Wasser resp. Dampf beaufschlagt, welche den Verdampfer 22 vollständig durchströmt haben.

Bei einer Teilmengenreinigung im Vollastbetrieb, welche Fahrweise bei Vorliegen einer nur geringen Verunreinigung gewählt wird, ist das Ventil 34 ganz offen, das Ventil 35 ist teilweise offen. Der über die Leitung 33 abgezogene feuchte Dampf, der die Verunreinigungen enthält, wird in der Flasche 25 niedergeschlagen. Der Niederschlag wird über die Abschlämmleitung 29 ausgetragen. Der den unteren Verdampferteil beaufschlagende Restdampf wird bei diesem Verfahren mit Sicherheit überhitzt.

Bei einer Vollstromreinigung im Vollastbetrieb, welche Fahrweise bei Vorliegen einer starken Verunreinigung gewählt wird, ist das Ventil 34 geschlossen, das Ventil 35 ist offen. Die gesamte Dampfmenge umfährt den unteren Teil des Verdampfers 22 und wird so in feuchtem Zustand in die Abscheideflasche 25 geführt, in welcher die Separation und die Ausscheidung der Verunreinigungen erfolgt.

In Fig. 3 ist die zweitgenannte Methode dargestellt. Funktionsgleiche Elemente sind mit den gleichen Bezugszeichen versehen wie in Figur 1. Der aus einer Stufe unvollständiger Verdampfung entnommene Dampf wird über die Leitung 33 zunächst in eine sogenannte Anfahr-Abscheideflasche 125 und von dort in die eigentliche Reinigungs-Abscheideflasche 25 geleitet. Die Teilmengenreinigung und die Vollstromreinigung geschehen auf die gleiche Art wie oben beschrieben, wobei jeweils beide Flaschen 125 und 25 in Betrieb sind und nacheinander durchströmt werden. Es versteht sich, dass je nach Bedarf - welcher abhängig sein kann vom Kraftwerkstyp, von der Leistung, von der Kesselbauart, von der Durchströmung, von der Anordnung der Wärmetauschflächen usw. - eine beliebige Anzahl Dampfentnahmen im Verdampfer und Abscheideflaschen zur Anwendung gelangen können.

Ein besonderes Problem stellt der Kaltstart einer solchen Anlage ohne Kondensatreinigungseinrichtung dar. Nach einem längeren Stillstand, einer zumindest nahezu vollständigen Abkühlung oder sogar einer Konservierung sind die Verunreinigungen im Wasser-Dampfkreislauf besonders hoch. Dies kann die Folge sein von Konservierungsmitteln, von anlässlich Reparaturmassnahmen verursachten Verschmutzungen, von Stillstandskorrosion oder von durch instationäre Temperatur- und Druckspannungen bedingten Material-Abplatzungen. Die Kaltstart-Reinigung hat demnach besonders sorgfältig zu erfolgen und hat zum Zweck, die Anlage für den Dauerbetrieb bereitzustellen.

Entsprechen die Qualität von Kondensat und Speisewasser nicht den durch internationale Standards vorgegebenen Werten, so wird die Anlage folgendermassen angefahren:

Das über den Verdampfer 22 in die Abscheideflasche 25 gelangende unterkühlte Wasser bzw. Sattwasser wird nicht über die Leitung 26 rezirkuliert, sondern über die Abschlämmleitung 29 anteilig oder vollständig verworfen. Mit dem weiteren Anfahren gelangt Nassdampf in die Abscheideflasche 25. Entsprechen die Qualität von Kondensat, Speisewasser und Dampf noch nicht den gewünschten Werten, so wird das in Form von Feuchte/Nässe in die Abscheideflasche gelangende und darin weitgehend abgeschiedene Wasser weiterhin nicht rezirkuliert, sondern über die Abschlämmleitung 29 anteilig oder vollständig verworfen. Zeichnet sich in der Folge ab, dass beim Weiterbelasten auch bis zum Trockenfahren der Abscheideflasche eine von den internationalen Standards vorgegebene Qualität von Kondensat, Speisewasser und Dampf immer noch nicht erreicht wird, so wird der Kaltstart bei einem entsprechend der Verunreinigung zweckmässigen Zustand - Druck und Feuchte in der Abscheideflasche - gehalten. Es erfolgt keine weitere Auflastung. In diesem Haltepunkt wird so lange verharrt und gereinigt, d.h. separiertes Wasser abgeschlämmt, bis die angestrebte Reinheit des Wasser-Dampfkreislaufes erreicht ist.

Hierbei wirkt sich auf die Abscheidung von Verunreinigungen in der Abscheideflasche besonders günstig aus, dass während des Startens, d.h. bei extrem niedriger Teillast, die Drücke, die Wärmeströme und die Geschwindigleiten, zumindest betreffend das Wasser, klein sind. Es liegen quasistationäre Bedingungen vor. Die niedrigen Werte bewirken eine für die Abscheidung günstige Beeinflussung des Verteilkoeffizienten. Dieser Verteilkoeffizient ist definiert als das Verhältnis der Konzentration der Verunreinigungen in der Dampfphase und in der Wasserphase am Eintritt in die Abscheideflasche. Dieses Verhältnis ist stark abhängig vom Druck, von der Dynamik des Verdampfungsvorganges, d.h. der Möglichkeit der Einstellung chemischer Gleichgewichte sowie von den Verunreinigungen selbst. Mit steigendem Druck nimmt der Zahlenwert des Verteilkoeffizienten zu, d.h. die Aufkonzentration im Wasser geht zurück. Die am Austritt der Abscheideflasche erzielbare Dampfreinheit ist abhängig von diesem Verteilkoeffizient und der Abschlämmrate. Je kleiner der Verteilkoeffizient ist und damit der Druck am Abscheider, desto besser wird die Dampfreinheit und umgekehrt.

Erst wenn die angestrebte Reinheit des Wasser-Dampfkreislaufes erreicht ist, wird der Anfahrvorgang fortgesetzt, worauf die Abscheideflasche schliesslich trocken gefahren wird.

Durch diese hocheffiziente Kaltstart-Reinigung können auf lange Sicht weitere Reinigungen während des Betriebes vermieden werden. Da überdies die Zahl der Kaltstarts einer Anlage im Vergleich zu Warmstarts oder Heissstarts pro Jahr begrenzt ist, ist die Anfahrzeit beim Kaltstat ohne Bedeutung. Das Verwerfen von Wasser gemäss diesem Verfahren ist gegenüber einer chemischen Reinigung die eindeutig kostengünstigere Variante. Bei einem Kombikraftwerk ist mit einer zu verwerfenden Wassermenge von ca. 30 m³ zu rechnen.

### Bezugszeichenliste

- 1: Leitung (angesaugte Frischluft)
- 2: Verdichter
- 3: Brennkammer
- 4: Gasturbine
- 5: Generator
- 6: Leitung (Abgas)
- 7: Abhitzedampferzeugungsanlage
- 8: Leitung (zum Kamin)
- 9: Hochdruckturbine
- 10: Mitteldruckturbine
- 11: Niederdruckturbine
- 13: Kondensator
- 14: Kondensatpumpe
- 15: Niederdruckeconomiser
- 16: Niederdruckverdampfer
- 17: Niederdrucktrommel
- 18: Umwälzpumpe
- 19: Niederdrucküberhitzer
- 20: Speisewasserpumpe
- 21: Hochdruckeconomiser
- 22: Hochdruckverdampfer
- 23: Hochdrucküberhitzer
- 24: Frischdampfleitung
- 25: Reinigungs-Abscheideflasche
- 26: Rezirkulationsleitung
- 27: Zwischenüberhitzer
- 28: Niederdruck-Dampfleitung
- 29: Abschlämmleitung
- 30: Absperrorgan
- 31: Leitung zwischen 22 und 25
- 32: Leitung zwischen 25 und 23
- 33: Leitung zwischen 22 und 25, 125
- 34: Ventil in 31
- 35: Ventil in 33
- 125: Anfahr-Abscheideflasche

## Patentansprüche

1. Verfahren zum Reinigen des Wasser-Dampfkreislaufs einer kombinierten Gas-Dampf-Kraftwerksanlage, welche einen Gasturbinenkreislauf und einen Dampfturbinenkreislauf aufweist, wobei die Abgase einer Gasturbine (4) ihre Restwärme über das in einem 2-Druck-Dampferzeuger strömende Arbeitsmittel an eine Dampfturbine abgeben, wobei der 2-Druck-Dampferzeuger in einem Niederdruckteil als Umlaufsystem mit Trommel (17) und in einem Hochdruckteil als Zwangsdurchlaufsystem ausgeführt ist, und wobei der Zwangsdurchlauf-dampferzeuger im wesentlichen aus einem Hochdruckeconomiser (21), einem Hochdruckverdampfer (22) und einem Hochdrucküberhitzer (23) besteht, und wobei zwischen dem Hochdruckverdampfer (22) und dem Hochdrucküberhitzer (23) eine Abscheideflasche (25) geschaltet ist,
dadurch gekennzeichnet,
dass das Arbeitsmittel dem Hochdruckeconomiser (21) über eine Hochdruckspeisepumpe (20) aus der Niederdrucktrommel (17) zugeführt wird, wobei die Niederdrucktrommel die Funktion des Speisewasserbehälters übernimmt,
und dass entweder bei Vollastbetrieb oder bei Teillastbetrieb über die Hochdruckspeisepumpe (20) eine grössere Menge Wasser als erforderlich durch den Hochdruckeconomiser (21) und den Hochdruckverdampfer (22) gefördert wird, welche Wassermenge so bemessen ist, dass Nassdampf in die Abscheideflasche (25) gelangt, dass der Wasseranteil des Dampfes mit allen darin enthaltenen Verunreinigungen in der Abscheideflasche separiert und über eine Abschlämmleitung (29) abgezogen wird.

2. Verfahren nach Anspruch 1, dadurch gekennzeichnet, dass während der Überspeisung die über die Hochdruckspeisepumpe (20) zu fördernde Wassermenge so geregelt wird, dass sich die Frischdampftemperatur am Austritt des Überhitzers (23) nach kurzem Absinken selbsttätig auf den Nennwert beim jeweiligen Lastpunkt einstellt.

3. Verfahren zum Reinigen des Wasser-Dampfkreislaufs einer kombinierten Gas-Dampf-Kraftwerksanlage, welche einen Gasturbinenkreislauf und einen Dampfturbinenkreislauf aufweist, wobei die Abgase einer Gasturbine (4) ihre Restwärme über das in einem 2-Druck-Dampferzeuger strömende Arbeitsmittel an eine Dampfturbine abgeben, wobei der 2-Druck-Dampferzeuger in einem Niederdruckteil als Umlaufsystem mit Trommel (17) und in einem Hochdruckteil als Zwangsdurchlaufsystem ausgeführt ist, und wobei der Zwangsdurchlauf-dampferzeuger im wesentlichen aus einem Hochdruckeconomiser (21), einem Hochdruckverdampfer (22) und einem Hochdrucküberhitzer (23) besteht, und wobei zwischen dem Hochdruckverdampfer (22) und dem Hochdrucküberhitzer (23) mindestens eine Abscheideflasche (25, 125) geschaltet ist,
dadurch gekennzeichnet,
dass das Arbeitsmittel dem Hochdruckeconomiser (21) über eine Hochdruckspeisepumpe (20) aus der Niederdrucktrommel (17) zugeführt wird, wobei die Niederdrucktrommel die Funktion des Speisewasserbehälters übernimmt,
dass beim zumindest annähernden Vollastbetrieb ohne zusätzliche Überspeisung des Systems aus dem Hochdruckverdampfer (22) Dampf aus mindestens einer Stufe unvollständiger Verdampfung entnommen und in die mindestens eine Abscheideflasche (25, 125) geleitet wird.

4. Verfahren nach Anspruch 3, dadurch gekennzeichnet, dass bei starker Verunreinigung die gesamte Dampfmenge aus der mindestens einen Stufe unvollständiger Verdampfung entnommen und in die mindestens eine Abscheideflasche (25, 125) geleitet wird.

5. Verfahren nach Anspruch 3, dadurch gekennzeichnet, dass bei geringer Verunreinigung nur eine Teilmenge Dampf aus der mindestens einen Stufe unvollständiger Verdampfung entnommen und zusammen mit der am Austritt des Verdampfers vorliegenden Restdampfmenge in die mindestens eine Abscheideflasche (25, 125) geleitet wird.

6. Verfahren nach Anspruch 3, dadurch gekennzeichnet, dass der aus mindestens einer Stufe unvollständiger Verdampfung entnommene Dampf zunächst in eine Anfahr-Abscheideflasche (125) und von dort in die Reinigungs-Abscheideflasche (25) geleitet wird.

7. Verfahren zum Reinigen des Wasser-Dampfkreislaufs einer kombinierten Gas-Dampf-Kraftwerksanlage, welche einen Gasturbinenkreislauf und einen Dampfturbinenkreislauf aufweist, wobei die Abgase einer Gasturbine (4) ihre Restwärme über das in einem 2-Druck-Dampferzeugerströmende Arbeitsmittel an eine Dampfturbine abgeben, wobei der 2-Druck-Dampferzeuger in einem Niederdruckteil als Umlaufsystem mit Trommel (17) und in einem Hochdruckteil als Zwangsdurchlaufsystem ausgeführt ist, und wobei der Zwangsdurchlauf-dampferzeuger im wesentlichen aus einem Hochdruckeconomiser (21), einem Hochdruckverdampfer (22) und einem Hochdrucküberhitzer (23) besteht, und wobei zwischen dem Hochdruckverdampfer (22) und dem Hochdrucküberhitzer (23) eine Abscheideflasche (25) geschaltet ist,
dadurch gekennzeichnet,
dass das Arbeitsmittel dem Hochdruckeconomiser (21) über eine Hochdruckspeisepumpe (20) aus der Niederdrucktrommel (17) zugeführt wird, wobei die Niederdrucktrommel die Funktion des Speisewasserbehälters übernimmt,
- dass beim Kaltstart das über den Hochdruckverdampfer (22) in die Abscheideflasche (25) gelangende unterkühlte Wasser zumindest anteilig über eine Abschlämmleitung (29) verworfen wird,
- dass der beim weiteren Anfahren im Hochdruckverdampfer (22) erzeugte Nassdampf in die Abscheideflasche (25) gelangt, darin die Verunreinigungen enthaltene Feuchte abgeschieden wird und das Wasser zumindest anteilig über die Abschlämmleitung (29) verworfen wird,
- dass bei immer noch vorhandener Verunreinigung das Hochfahren der Anlage unterbrochen wird, und in einem der Verunreinigung entsprechenden Druck- und Feuchte-Zustand in der Abscheideflasche (25) verharrt wird, wobei in der Flasche das abgeschiedene Wasser so lange verworfen wird, bis die angestrebte Reinheit im Wasser-Dampfkreislauf erreicht ist,
- worauf der Anfahrvorgang bis zum Trockenbetrieb der Abscheideflasche fortgesetzt wird.

## Claims

1. Method for cleaning the water/steam circuit of a combined gas/steam power plant which has a gas turbine circuit and a steam turbine circuit, the waste gases from a gas turbine (4) transmitting their residual heat to a steam turbine via the working medium flowing in a 2-pressure steam generator, the 2-pressure steam generator being designed, in a low-pressure part, as a circulation system with a drum (17) and, in a high-pressure part, as a once-through forced-flow system, and the once-through forced-flow steam generator consisting essentially of a high-pressure economizer (21), a high-pressure evaporator (22) and a high-pressure superheater (23), and a separation bottle (25) being connected between the high-pressure evaporator (22) and the high-pressure superheater (23), characterized in that the working medium is supplied to the high-pressure economizer (21) from the low-pressure drum (17) via a high-pressure feed pump (20), the low-pressure drum performing the function of the feed water tank, and in that, either in the full-load mode or in the part-load mode, a greater quantity of water than is necessary is conveyed through the high-pressure economizer (21) and the high-pressure evaporator (22) via the high-pressure feed pump (20), the said water quantity being dimensioned in such a way that wet steam passes into the separation bottle (25), and in that the water fraction of the steam, together with all the impurities contained in it, is separated in the separation bottle and is drawn off via a clarifying line (29).

2. Method according to Claim 1, characterized in that during the overfeeding the water quantity to be conveyed via the high-pressure feed pump (20) is regulated in such a way that the fresh steam temperature at the outlet of the superheater (23), after falling briefly, is automatically set to the nominal value at the respective load point.

3. Method for cleaning the water/steam circuit of a combined gas/steam power plant which has a gas turbine circuit and a steam turbine circuit, the waste gases from a gas turbine (4) transmitting their residual heat to a steam turbine via the working medium flowing in a 2-pressure steam generator, the 2-pressure steam generator being designed, in a low-pressure part, as a circulation system with a drum (17) and, in a high-pressure part, as a once-through forced-flow system, and the once-through forced-flow steam generator being composed essentially of a high-pressure economizer (21), of a high-pressure evaporator (22) and of a high-pressure superheater (23), and at least one separation bottle (25, 125) being connected between the high-pressure evaporator (22) and the high-pressure superheater (23), characterized in that the working medium is supplied to the high-pressure economizer (21) from the low-pressure drum (17) via a high-pressure feed pump (20), the low-pressure drum performing the function of the feed water tank, and in that in the at least approximately full-load mode, steam from at least one stage of incomplete evaporation is extracted out of the high-pressure evaporator (22) without additional overfeeding of the system, and is led into the at least one separation bottle (25, 125).

4. Method according to Claim 3, characterized in that, in the event of heavy contamination, the entire steam quantity from the at least one stage of incomplete evaporation is extracted and is led into the at least one separation bottle (25, 125).

5. Method according to Claim 3, characterized in that, in the event of low contamination, only a part quantity of steam from the at least one stage of incomplete evaporation is extracted and, together with the residual steam quantity present at the outlet of the evaporator, is led into the at least one separation bottle (25, 125).

6. Method according to Claim 3, characterized in that the steam extracted from at least one stage of incomplete evaporation is led first into a start-up separation bottle (125) and from there into the cleaning separation bottle (25).

7. Method for cleaning the water/steam circuit of a combined gas/steam power plant which has a gas turbine circuit and a steam turbine circuit, the waste gases from a gas turbine (4) transmitting their residual heat to a steam turbine via the working medium flowing in a 2-pressure steam generator, the 2-pressure steam generator being designed, in a low-pressure part, as a circulation system with a drum (17) and, in a high-pressure part, as a once-through forced-flow system, and the once-through forced-flow steam generator being composed essentially of a high-pressure economizer (21), of a high-pressure evaporator (22) and of a high-pressure superheater (23), and a separation bottle (25) being connected between the high-pressure evaporator (22) and the high-pressure superheater (23), characterized in that the working medium is supplied to the high-pressure economizer (21) from the low-pressure drum (17) via a high-pressure feed pump (20), the low-pressure drum performing the function of the feed water tank,
- in that during cold starting, the supercooled water passing via the high-pressure evaporator (22) into the separation bottle (25) is discarded at least proportionately via a clarifying line (29),
- in that the wet steam generated during further start up in the high-pressure evaporator (22) passes into the separation bottle (25), the moisture containing the impurities is separated therein and the water is discarded at least proportionately via the clarifying line (29),
- in that if contamination is still present, the runup of the plant is interrupted and the separation bottle (25) waits in a pressure and moisture state corresponding to the contamination, the separated water being discarded in the bottle until the desired purity in the water/steam circuit is reached,
- whereupon the start-up operation is continued until the separation bottle runs dry.

## Revendications

1. Procédé pour le nettoyage du circuit eau-vapeur d'une installation de centrale combinée gaz-vapeur, qui présente un circuit de turbine à gaz et un circuit de turbine à vapeur, dans lequel les gaz d'échappement d'une turbine à gaz (4) cèdent leur chaleur résiduelle à une turbine à vapeur par l'intermédiaire du fluide de travail circulant dans un générateur de vapeur à double pression, dans lequel le générateur de vapeur à double pression est constitué d'un système de recirculation à tambour (17) dans une partie à basse pression et est constitué d'un système à circulation forcée dans une partie à haute pression, et dans lequel le générateur de vapeur à circulation forcée se compose essentiellement d'un économiseur à haute pression (21), d'un évaporateur à haute pression (22) et d'un surchauffeur à haute pression (23), et dans lequel une bouteille de séparation (25) est installée entre l'évaporateur à haute pression (22) et le surchauffeur à haute pression (23),
caractérisé en ce que le fluide de travail est envoyé à l'économiseur à haute pression (21) par une pompe d'alimentation à haute pression (20) à partir du tambour à basse pression (17), le tambour à basse pression assurant la fonction du réservoir d'eau d'alimentation, et en ce que, soit en marche à pleine charge soit en marche à charge partielle, une quantité d'eau plus grande que nécessaire est mise en circulation par la pompe d'alimentation à haute pression (20) à travers l'économiseur à haute pression (21) et l'évaporateur à haute pression (22), laquelle quantité d'eau est dosée de telle façon que de la vapeur humide arrive dans la bouteille de séparation (25), que la fraction d'eau de la vapeur soit séparée dans la bouteille de séparation avec les impuretés qu'elle contient et soit éliminée par une conduite de décrassage (29).

2. Procédé suivant la revendication 1, caractérisé en ce que, pendant la suralimentation, la quantité d'eau à mettre en circulation par la pompe d'alimentation à haute pression (20) est réglée de telle façon que la température de la vapeur vive à la sortie du surchauffeur (23) s'établisse automatiquement, après une courte baisse, à la valeur nominale adaptée au niveau de charge respectif.

3. Procédé pour le nettoyage du circuit eau-vapeur d'une installation de centrale combinée gaz-vapeur, qui présente un circuit de turbine à gaz et un circuit de turbine à vapeur, dans lequel les gaz d'échappement d'une turbine à gaz (4) cèdent leur chaleur résiduelle à une turbine à vapeur par l'intermédiaire du fluide de travail circulant dans un générateur de vapeur à double pression, dans lequel le générateur de vapeur à double pression est constitué d'un système de recirculation à tambour (17) dans une partie à basse pression et est constitué d'un système à circulation forcée dans une partie à haute pression, et dans lequel le générateur de vapeur à circulation forcée se compose essentiellement d'un économiseur à haute pression (21), d'un évaporateur à haute pression (22) et d'un surchauffeur à haute pression (23), et dans lequel au moins une bouteille de séparation (25, 125) est installée entre l'évaporateur à haute pression (22) et le surchauffeur à haute pression (23),
caractérisé en ce que le fluide de travail est envoyé à l'économiseur à haute pression (21) par une pompe d'alimentation à haute pression (20) à partir du tambour à basse pression (17), le tambour à basse pression assurant la fonction du réservoir d'eau d'alimentation, et en ce qu'en marche au moins approximativement à pleine charge sans suralimentation supplémentaire du système, de la vapeur est prélevée hors de l'évaporateur à haute pression (22) dans au moins un étage à vaporisation incomplète et est menée dans la au moins une bouteille de séparation (25, 125).

4. Procédé suivant la revendication 3, caractérisé en ce qu'en cas de fort encrassement, toute la quantité de vapeur est prélevée dans le au moins un étage à vaporisation incomplète et est menée dans la au moins une bouteille de séparation (25, 125).

5. Procédé suivant la revendication 3, caractérisé en ce qu'en cas de faible encrassement, seule une quantité partielle de vapeur est prélevée dans le au moins un étage à vaporisation incomplète et est menée dans la au moins une bouteille de séparation (25, 125) en même temps que la quantité résiduelle de vapeur présente à la sortie de l'évaporateur.

6. Procédé suivant la revendication 3, caractérisé en ce que la vapeur prélevée dans au moins un étage à vaporisation incomplète est menée d'abord dans une bouteille de séparation de démarrage (125) et de là dans la bouteille de séparation de nettoyage (25).

7. Procédé pour le nettoyage du circuit eau-vapeur d'une installation de centrale combinée gaz-vapeur, qui présente un circuit de turbine à gaz et un circuit de turbine à vapeur, dans lequel les gaz d'échappement d'une turbine à gaz (4) cèdent leur chaleur résiduelle à une turbine à vapeur par l'intermédiaire du fluide de travail circulant dans un générateur de vapeur à double pression, dans lequel le générateur de vapeur à double pression est constitué d'un système de recirculation à tambour (17) dans une partie à basse pression et est constitué d'un système à circulation forcée dans une partie à haute pression, et dans lequel le générateur de vapeur à circulation forcée se compose essentiellement d'un économiseur à haute pression (21), d'un évaporateur à haute pression (22) et d'un surchauffeur à haute pression (23), et dans lequel une bouteille de séparation (25) est installée entre l'évaporateur à haute pression (22) et le surchauffeur à haute pression (23),
caractérisé en ce que le fluide de travail est envoyé à l'économiseur à haute pression (21) par une pompe d'alimentation à haute pression (20) à partir du tambour à basse pression (17), le tambour à basse pression assurant la fonction du réservoir d'eau d'alimentation, en ce qu'au démarrage à froid, l'eau sous-refroidie arrivant dans la bouteille de séparation (25) par l'évaporateur à haute pression (22) est au moins en partie rejetée par une conduite de décrassage (29), en ce qu'au démarrage suivant, une vapeur humide produite dans l'évaporateur à haute pression (22) parvient dans la bouteille de séparation (25), l'humidité contenant les impuretés est précipitée dans celle-ci et l'eau est au moins en partie rejetée par la conduite de décrassage (29), en ce qu'en présence d'un encrassement subsistant encore, l'accélération de l'installation est interrompue et est maintenue dans un état de pression et d'humidité dans la bouteille de séparation (25) correspondant à l'encrassement, l'eau précipitée dans la bouteille étant rejetée jusqu'à ce que la pureté recherchée dans le circuit eau-vapeur soit atteinte, l'opération de démarrage étant alors poursuivie jusqu'au fonctionnement à sec de la bouteille de séparation.
